# EUROPÄISCHE PATENTSCHRIFT

(11) **EP 0 928 257 B1**
(45) Veröffentlichungstag und Bekanntmachung des Hinweises auf die Patenterteilung: **16.07.2003**
(21) Anmeldenummer: 97941959.5
(22) Anmeldetag: 22.08.1997
(51) Int. Cl.: B60Q 1/26, F16B 37/14

(54) **VORRICHTUNG ZUM BEFESTIGEN EINES SCHEINWERFERS ODER EINER LEUCHTE AN EINEM FAHRZEUGTEIL**
DEVICE FOR SECURING A HEADLIGHT OR LAMP ON A VEHICLE PART
DISPOSITIF DE FIXATION D'UN PHARE OU D'UNE LAMPE SUR UN ELEMENT DE VEHICULE

(30) Priorität: 28.09.1996 DE 19640096
(43) Veröffentlichungstag der Anmeldung: 14.07.1999
(73) Patentinhaber: Volkswagen Aktiengesellschaft, 38436 Wolfsburg (DE)
(72) Erfinder: MÜLLER, Michael, D-38518 Gifhorn (DE)
(86) Internationale Anmeldenummer: EP9704592
(87) Internationale Veröffentlichungsnummer: WO98013229

(56) Entgegenhaltungen:
- DE-C- 4 438 491
- FR-A- 2 683 196
- FR-A- 2 689 945
- FR-A- 2 729 191
- GB-A- 2 055 421
- US-A- 4 532 577
- US-A- 4 954 932

## Beschreibung

Die Erfindung betrifft eine zum allgemeinen St. d. T. gehörende Vorrichtung zum Befestigen eines Scheinwerfers oder einer Leuchte an einem Fahrzeugteil, wobei der Scheinwerfer oder die Leuchte ein Gehäuse und eine Lichtscheibe aufweist, und das Gehäuse mit der Lichtscheibe als bauliche Einheit mit einem oder mehreren Befestigungsmitteln an dem Fahrzeugteil befestigbar ist, und die Lichtscheibe die Befestigungsmittel nicht überdeckt. Aus der europäischen Patentanmeldung EP 604 306 A1 ist eine Befestigungsvorrichtung bekannt, bei der die Befestigungsmittel von der Lichtscheibe überdeckt werden. Bei dieser Anordnung wird jedoch zuerst das Gehäuse an einem Fahrzeugteil befestigt und anschließend die Lichtscheibe auf das Gehäuse aufgesteckt. Die Befestigungsmittel sind ohne Entfemen der Lichtscheibe nicht zugänglich.

Aus der US-Patentschrift US 4,532,577 ist die Befestigung einer Rückleuchte eines Fahrzeuges bekannt, bei der die Befestigungsschrauben mittels Abdeckkappen verdeckt werden. Da die Abdeckkappen jedoch im geschlossenen Zustand der Heckklappe von derselben verdeckt werden, sind besondere Anforderungen hinsichtlich der Beschaffenheit insbesondere der Optik der Abdeckkappen hier nicht vorgesehen.

In der deutschen Patentschrift DE 43 23 854 C1 ist eine Einstelleinrichtung eines Scheinwerfers beschrieben, bei der die Stelleinrichtung zwischen einem Scheinwerfer und einer Blinkleuchte angeordnet ist. Die Stelleinrichtung wird hier von der Lichtscheibe der Blinkleuchte überdeckt.

Eine derartige Abdeckung der Befestigungs- oder Einstellmittel ist jedoch nur möglich, wenn an den Scheinwerfer oder an die Leuchte eine zweite Leuchte angrenzt. Wird eine Leuchte oder ein Scheinwerfer ohne benachbarte Leuchte in einem Fahrzeugteil befestigt, dann ist diese Lösung nicht möglich. Weiterhin erfordert diese Lösung eine Mindestspaltweite zum Einführen des Einstellwerkzeuges.

Im übrigen ist im Stand der Technik bekannt, die Befestigungseinrichtungen oder Einstelleinrichtungen mit angrenzenden Karosserieteilen zu überdecken oder an der rückwärtigen Gehäusewand des Scheinwerfers anzuordnen. Die Betätigung derartiger Befestigungsvorrichtungen ist jedoch nur möglich wenn der Scheinwerfer benachbart von abnehmbaren oder öffnenbaren Karosserieteilen angeordnet ist, und die Zugänglichkeit durch das Öffnen oder Abnehmen der Karosserieteile ermöglicht wird. Wird ein Scheinwerfer oder eine Leuchte in der Mitte eines Karosserieteiles angeordnet, wie z. B. auf einem Kotflügel, so können die Befestigungsmittel nicht von der Motorhaube, Stoßfänger etc. verdeckt werden. Weiterhin kann es aus konstruktiven Gründen problematisch sein, eine montagefreundliche Zugangsmöglichkeit von der dem Motorinnenraum zugewandten Seite des Kotflügels zu schaffen.

Es ist auch bekannt, den Scheinwerfer oder die Leuchte mit Befestigungsmitteln, wie z. B. einer Schraube, durch die Lichtscheibe hindurch zu befestigen. Bei einer derartigen Lösung sind die Befestigungsmittel ohne eine zusätzliche Abdeckung beim Betrachten der Lichtscheibe von außen zu erkennen. Eine solche Lösung ist wegen der heutzutage hohen Anforderungen an die Aerodynamik und an die Ästhetik nicht akzeptabel.

Aufgabe der Erfindung ist es nun, eine Vorrichtung zum Befestigen eines Scheinwerfers oder einer Leuchte mit einem Gehäuse und einer Lichtscheibe zu finden, wobei der Scheinwerfer oder die Leuchte alleinstehend an einem Karosserieteil angeordnet ist und die Befestigung von der Seite der Lichtscheibe her erfolgen soll. Der Scheinwerfer oder die Leuchte soll als bauliche Einheit von Gehäuse und Lichtscheibe an dem Fahrzeugteil befestigbar sein. Weiterhin soll die Lösung den heutzutage sehr hohen Anforderungen an die Ästhetik und an die Aerodynamik genügen.

Die Aufgabe wird erfindungsgemäß durch die Merkmale des Anspruchs 1 gelöst. Vorteilhafte Aus- und Weiterbildungen sind in den Unteransprüchen gegeben.

Durch die erfindungsgemäße Lösung der Aufgabe wird es ermöglicht, einen Scheinwerfer oder eine Leuchte, im folgenden nur noch Leuchte genannt, innerhalb einer Fläche eines Fahrzeugteiles alleinstehend von außen an dem Fahrzeugteil zu befestigen. Die Befestigungsmittel werden durch optische Mittel überdeckt, so daß für einen Betrachter der Lichtscheibe einem wesentlichen homogener Gesamteindruck vermittelbar ist.

Die optischen Mittel können dazu aus dem gleichen Werkstoff, wie die Lichtscheibe, hergestellt sein. Weiterhin kann der homogene Gesamteindruck dadurch verbessert werden, daß die Farbgebung und/oder die Profilierung der optischen Mittel an die Farbgebung und/oder die Profilierung der Lichtscheibe angepaßt ist.

Zur Erreichung einer guten aerodynamischen Eigenschaft wird vorgeschlagen, die Oberfläche der optischen Mittel an die Oberfläche der Lichtscheibe anzupassen.

Die Zugänglichkeit der Befestigungsmittel kann entweder dadurch ermöglicht werden, daß über dem Befestigungsmittel Öffnungen in der Streuscheibe vorgesehen werden, die Streuscheibe zum Rand hin Ausnehmungen aufweist oder die Streuscheibe nicht bis zum Rand des Gehäuses reicht. Der Gehäuseteil mit den Befestigungsmitteln der nicht von der Streuscheibe überdeckt wird, wird dann durch die optischen Mittel verdeckt. Es können dabei jedem Befestigungsmittel eine Öffnung mit einem die Öffnung verschließenden optischen Mitteln zugeordnet werden. Denkbar wäre es jedoch auch mehrere Befestigungsmittel einer gemeinsamen Öffnung zuzuordnen und dementsprechend mehrere Befestigungsmittel mit einem gemeinsamen optischen Mittel zu verdecken.

Dieses könnte z. B. ein Kreisring sein, mit dem alle Befestigungsmittel gemeinsam verdeckt werden.

Eine Weiterentwicklung der Erfindung besteht darin, die Befestigungsmittel direkt an dem optischen Mittel anzuformen.

Die Erfindung wird nachfolgend anhand eines Ausführungsbeispiels näher erläutert. Die Zeichnungen zeigen:
- Figur 1: Befestigungsvorrichtung für eine Leuchte mit einem optischen Mittel zur Abdeckung einer Öffnung über einem Befestigungsmittel;
- Figur 2: Befestigungsvorrichtung für eine Leuchte mit einer Schraube und an die Lichtscheibe angepaßten Schraubenkopf;
- Figur 3a; 3b: Befestigung für eine Leuchte mit einer über dem Befestigungsmittel angeordneter Ausnehmung,
- Figur 4: Befestigung für eine Leuchte mit einem eine Ausnehmung abdeckenden optischen Mittel und an dem optischen Mittel angeformtem Befestigungsmittel.

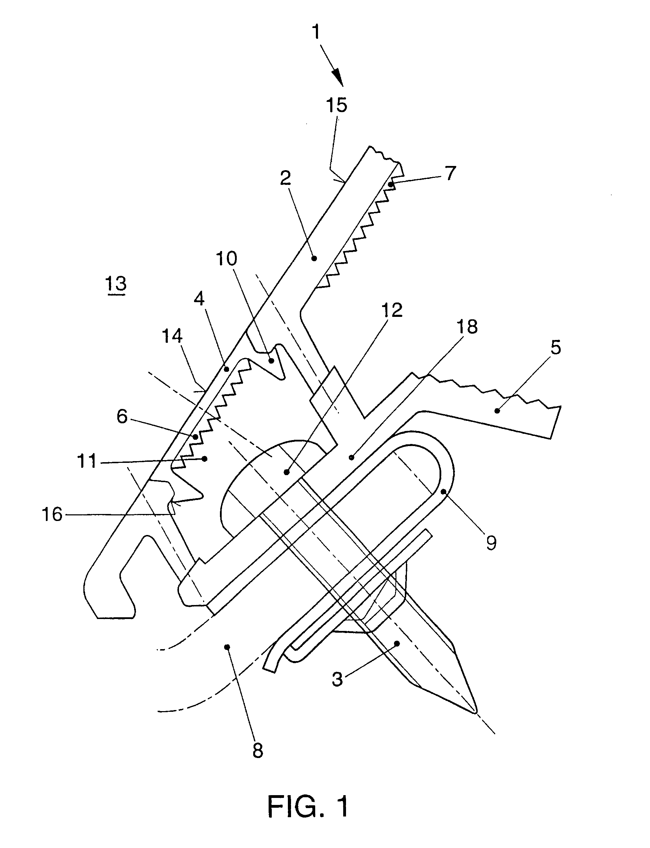

In Figur 1 ist eine Vorrichtung zum Befestigen einer Leuchte 1 zu erkennen, bei der ein Gehäuse 5 mit einer Lichtscheibe 2 als Baugruppe an einem Fahrzeugteil 8 befestigt ist. Das Gehäuse 5 weist zur Befestigung der Leuchte 1 einen oder mehrere Befestigungsansätze 18 auf, an denen Befestigungsmittel 3 zur Befestigung des Gehäuses 5 mit der darauf angeordneten Lichtscheibe 2 vorgesehen sind. Die Befestigungsmittel 3 können z. B. Schrauben sein, die durch Öffnungen in den Befestigungsansätzen 18 und Öffnungen im Fahrzeugteil 8 mit einem Befestigungsgegenstück 9 verschraubt sind.

Die Lichtscheibe 2 weist oberhalb jedes Befestigungsmittels 3 eine Öffnung 11 auf, durch die das Befestigungsmittel 3 z. B. eine Schraube lichtscheibenseitig zugänglich ist. Die Öffnung 11 kann auch eine Ausnehmung 17 sein, die sich bis zum Rand des Gehäuses 5 erstreckt. Weiterhin können auch mehrere Befestigungsmittel 3 durch eine Öffnung 11 oder Ausnehmung 17 gemeinsam zugänglich sein. Nach dem Befestigen der Leuchte 1 werden die Öffnungen 11 oder die Ausnehmungen 17 durch optische Mittel 4 verschlossen. Die optischen Mittel 4 können eine an die optische Farbgebung der Lichtscheibe 2 angepaßte optische Farbgebung aufweisen, und sind vorzugsweise aus dem gleichen Werkstoff wie die Lichtscheibe gefertigt. Weiterhin können die optischen Mittel 4 eine an die Profilierung 7 der Lichtscheibe 2 angepaßte Profilierung 6 aufweisen. Die Oberfläche 14 der optischen Mittel 4 ist der Oberfläche 15 der Lichtscheibe 2 angepaßt, d. h. die Oberfläche 14 ist derart ausgebildet, daß sich ein im wesentlichen kontinuierlicher Verlauf über beide Flächen 14 und 15 ergibt.

Die optischen Mittel 4 können beispielsweise mit Rastnasen 10, die hinter der Fläche 16 der Lichtscheibe 2 einrasten, in den Öffnungen 11 gehalten werden. Zur Demontage der Leuchte 1 können die optischen Mittel 4 auf einfache Art und Weise durch Heraushebeln z. B. mit einem Schraubendreher gelöst werden.

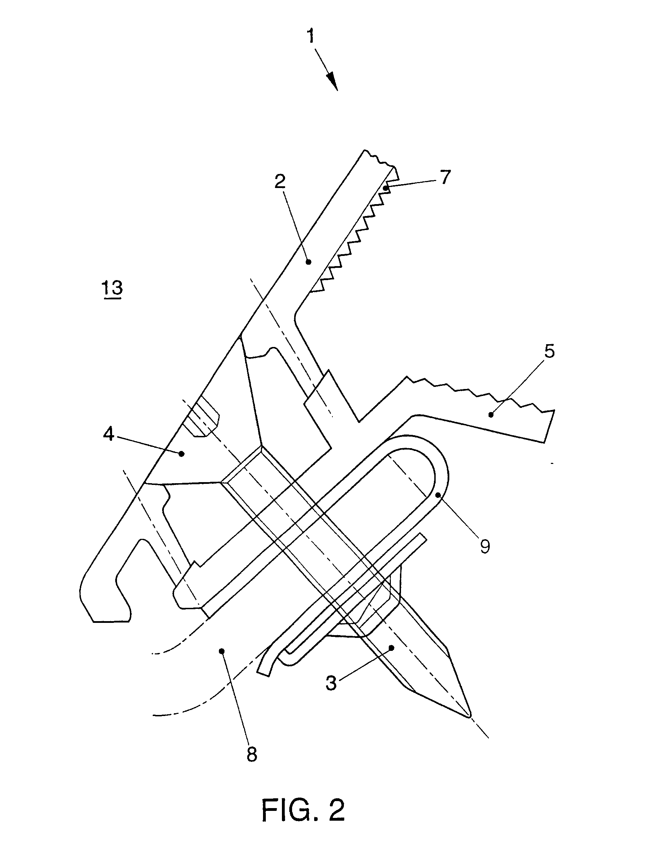

Denkbar wäre auch, wie in Figur 2 zu erkennen, die optische Mittel 4 direkt an dem Befestigungsmittel 3 anzuordnen.

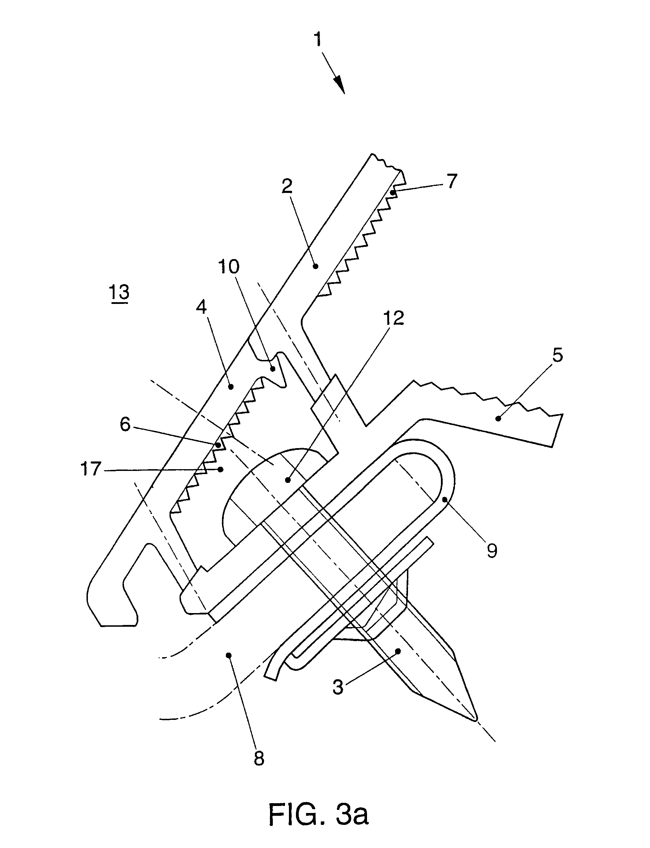

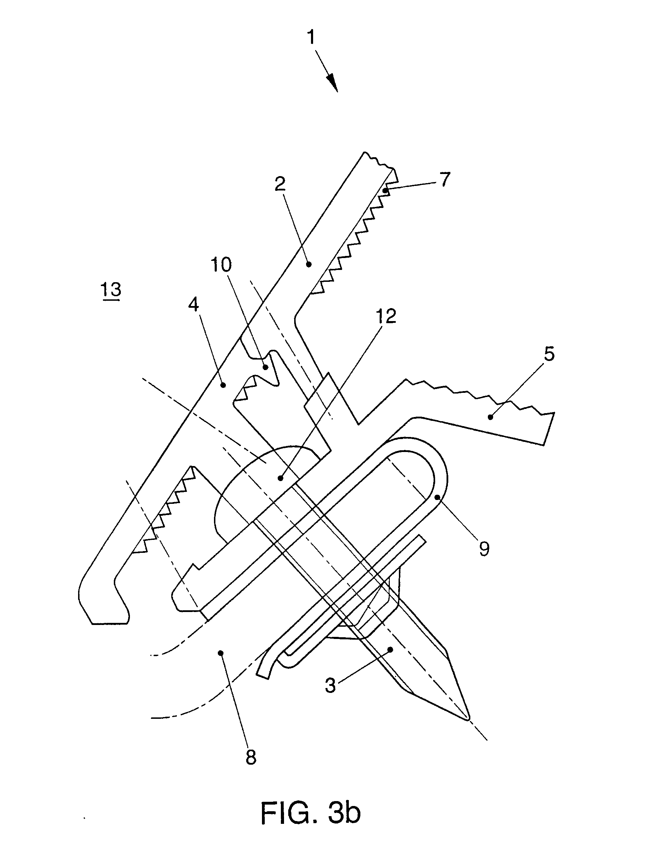

Ist über dem Befestigungsmittel 3 eine Ausnehmung 17 vorgesehen, so ist das optische Mittel 4 zweckmäßigerweise wie in Figur 3a und 3b zu erkennen, an der einen Seite am Rand der Lichtscheibe 2 eingerastet und außerdem entweder in dem Befestigungsmittel 3 oder auf dem Befestigungsansatz 18 zusätzlich befestigt.

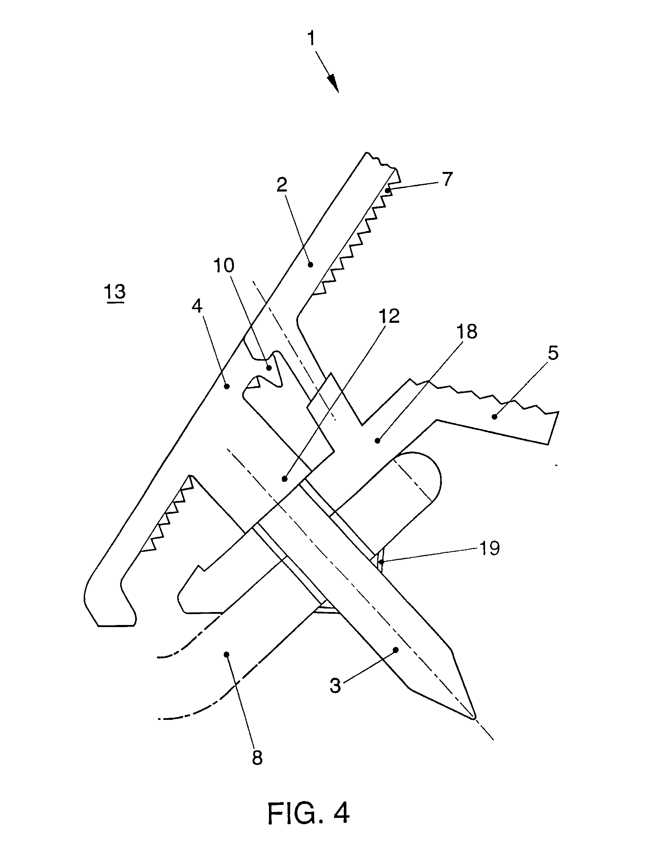

Denkbar wäre es auch, wie in Figur 4 gezeigt, an die die Ausnehmung abdeckenden optischen Mittel 4 das Befestigungsmittel 3 anzuformen, d. h. das Befestigungsmittel 3 mit dem optischen Mittel 4 einstückig auszubilden. Die Befestigung könnte dann, wenn ein Verschrauben nicht möglich ist, mit Federelementen 19 erfolgen. Das Fahrzeugteil 8 wird dann zwischen dem Befestigungsansatz 18 und den Federelementen 19 eingeklemmt, wodurch die Leuchte 1 an dem Fahrzeugteil 8 gehalten wird. Es können auch mehrere Befestigungselemente 3 unter einer Öffnung 11 oder Ausnehmung 17 angeordnet sein, und damit von einem gemeinsam optischen Mittel 4 überdeckt werden. Es wäre auch denkbar alle Befestigungsmittel 3 durch einen als Kreisring ausgebildetes optisches Mittel gemeinsam abzudecken, was insbesondere die Montage und Demontage erheblich vereinfacht.

### BEZUGSZEICHENLISTE

- 1: Leuchte
- 2: Lichtscheibe
- 3: Befestigungsmittel
- 4: optisches Mittel
- 5: Gehäuse
- 6: Profilierung des optischen Mittels
- 7: Profilierung der Lichtscheibe
- 8: Fahrzeugteil
- 9: Befestigungsgegenstück
- 10: Rastnase
- 11: Öffnung
- 14: Oberfläche des optischen Mittels
- 15: Oberfläche der Lichtscheibe
- 16: Rastfläche
- 17: Ausnehmung
- 18: Befestigungsansatz
- 19: Federelemente

## Patentansprüche

1. Vorrichtung zum Befestigen eines Scheinwerfers oder einer Leuchte (1) an einem Fahrzeugteil (8), wobei der Scheinwerfer oder die Leuchte (1) ein Gehäuse (5) und eine Lichtscheibe (2) aufweist und das Gehäuse (5) mit der Lichtscheibe (2) als bauliche Einheit mit einem oder mehreren Befestigungsmitteln (3) an dem Fahrzeugteil (8) befestigbar ist und die Lichtscheibe (2) die Befestigungsmittel (3) nicht überdeckt, **dadurch gekennzeichnet, daß** optische Mittel (4) vorgesehen sind, die die Befestigungsmittel (3) im eingebauten Zustand überdecken und derart ausgebildet sind, daß sich eine kontinuierliche, ohne Ecken oder Kanten verlaufende, Oberfläche (15 und 14) der Lichtscheibe (2) und der optischen Mittel (4) ergibt, so daß für einen Betrachter der Lichtscheibe (2) ein im wesentlichen homogener optischer Gesamteindruck des Scheinwerfers oder der Leuchte (1) vermittelbar ist.

2. Vorrichtung nach Anspruch 1, **dadurch gekennzeichnet, daß** die Lichtscheibe (2) und die optischen Mittel (4) aus dem gleichen Werkstoff hergestellt sind.

3. Vorrichtung nach Anspruch 1 oder 2, **dadurch gekennzeichnet, daß** die Profilierung (6) und/oder Farbgebung der optischen Mittel (4) zumindest stellenweise an die Profilierung (7) und/oder Farbgebung der Lichtscheibe (2) angepaßt ist.

4. Vorrichtung nach einem der Ansprüche 1 bis 3, **dadurch gekennzeichnet, daß** die optischen Mittel (4) eine Oberfläche (14) aufweisen, die dem Verlauf der Oberfläche (15) der Lichtscheibe (2) angepaßt ist.

5. Vorrichtung nach einem der Ansprüche 1 bis 4, **dadurch gekennzeichnet, daß** die Lichtscheibe (2) den Befestigungsmitteln (3) zugeordnete Öffnungen (11) oder Ausnehmungen (17) aufweist and diese mit den optischen Mitteln (4) verschließbar sind.

6. Vorrichtung nach Anspruch 5, **dadurch gekennzeichnet, daß** die optischen Mittel (4) Rastelemente (10) aufweisen und die optischen Mittel (4) durch Einrasten der Rastelemente (10) hinter einer dem Gehäuse (5) zugewandten Rastfläche (16) der Lichtscheibe (2) an der Lichtscheibe (2) befestigbar sind.

7. Vorrichtung nach einem der Ansprüche 1 bis 6, **dadurch gekennzeichnet, daß** das Befestigungsmittel (3) mit dem optischen Mittel (4) einstückig ausgebildet ist.

## Claims

1. Device for securing a headlight or a lamp (1) on a vehicle part (8), the headlight or the lamp (1) having a housing (5) and a light cap (2), and the housing (5) together with the light cap (2) being securable as a structural unit on the vehicle part (8) by one or more securing means (3), and the light cap (2) not covering the securing means (3), **characterized in that** optical means (4) are provided which cover the securing means (3) when they are fitted, and are designed in such a manner that a continuous surface (5 and 4) of the light cap (2) and of the optical means (4) is produced, the said surface not having edges or corners, with the result that an essentially homogeneous, total optical impression of the headlight or of the lamp (1) is imparted to a person looking at the light cap (2).

2. Device according to Claim 1, **characterized in that** the light cap (2) and the optical means (4) are produced from the same material.

3. Device according to Claim 1 or 2, **characterized in that** the profiling (6) and/or colouring of the optical means (4) is matched at least in some parts to the profiling (7) and/or colouring of the light cap (2).

4. Device according to one of Claims 1 to 3, **characterized in that** the optical means (4) have a surface (14) which is matched to the profile of the surface (15) of the light cap (2).

5. Device according to one of Claims 1 to 4, **characterized in that** the light cap (2) has openings (11) or recesses (17) assigned to the securing means (3), and the said openings or recesses can be closed by the optical means (4).

6. Device according to Claim 5, **characterized in that** the optical means (4) have latching elements (10), and the optical means (4) can be secured on the light cap (2) by snapping in the latching means (10) behind a latching surface (16) of the light cap (2), which surface faces the housing (5).

7. Device according to one of Claims 1 to 6, **characterized in that** the securing means (3) is designed as a single piece together with the optical means (4).

## Revendications

1. Dispositif pour la fixation d'un phare ou d'une lampe (1) sur une pièce (8) de véhicule, le phare ou la lampe (1) présentant un boîtier (5) et un réflecteur de lumière (2), le boîtier (5) pouvant être fixé comme entité modulaire avec le réflecteur de lumière (2) à l'aide d'un ou de plusieurs moyens de fixation (3) sur la pièce (8) du véhicule, le réflecteur de lumière (2) ne recouvrant pas les moyens de fixation (3), **caractérisé en ce que** des moyens optiques (4) qui recouvrent à l'état monté les moyens de fixation (3) sont prévus et sont configurés de manière à obtenir une continuité, qui s'étend sans coin ni arête, de la surface (15 et 14) du réflecteur de lumière (2) et des moyens optiques (4), de telle sorte qu'un observateur du réflecteur de lumière (2) reçoive une impression optique globale essentiellement homogène du phare ou de la lampe (1).

2. Dispositif selon la revendication 1, **caractérisé en ce que** le réflecteur de lumière (2) et les moyens optiques (4) sont réalisés dans le même matériau.

3. Dispositif selon la revendication 1 ou 2, **caractérisé en ce que** la profilation (6) et/ou la coloration des moyens optiques (4) est adaptée au moins en certains endroits à la profilation (7) et/ou à la coloration du réflecteur de lumière (2).

4. Dispositif selon l'une des revendications 1 à 3, **caractérisé en ce que** les moyens optiques (4) présentent une surface (14) qui est adaptée à l'évolution de la surface (15) du réflecteur de lumière (2).

5. Dispositif selon l'une des revendications 1 à 4, **caractérisé en ce que** le réflecteur de lumière (2) présente des ouvertures (11) ou des découpes (17) associées aux moyens de fixation (3), ces ouvertures ou découpes pouvant être fermées par les moyens optiques (4).

6. Dispositif selon la revendication 5, **caractérisé en ce que** les moyens optiques (4) présentent des éléments d'encliquetage (10), les moyens optiques (4) pouvant être fixés sur le réflecteur de lumière (2) par encliquetage des éléments d'encliquetage (10) derrière une surface d'encliquetage (16) du réflecteur de lumière (2) qui est tournée vers le boîtier (5).

7. Dispositif selon l'une des revendications 1 à 6, **caractérisé en ce que** les moyens de fixation (3) sont réalisés d'un seul tenant avec les moyens optiques (4).
